(19) Europäisches Patentamt
European Patent Office
Office européen des brevets

(11) **EP 3 935 361 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **20702460.5**

(22) Anmeldetag: **29.01.2020**

(51) Internationale Patentklassifikation (IPC):
**G01L 9/00** *(2006.01)* **G01L 15/00** *(2006.01)*
**G01L 19/08** *(2006.01)* **G01L 27/00** *(2006.01)*
**G01L 19/06** *(2006.01)*

(52) Gemeinsame Patentklassifikation (CPC):
**G01L 9/0041; G01L 15/00; G01L 19/069; G01L 19/083; G01L 27/002**

(86) Internationale Anmeldenummer:
**PCT/EP2020/052093**

(87) Internationale Veröffentlichungsnummer:
**WO 2020/177953 (10.09.2020 Gazette 2020/37)**

(54) **VERFAHREN ZUM BETREIBEN EINER DRUCKSENSORANORDNUNG**

METHOD VOR OPERATING A PRESSURE SENSOR ARRANGEMENT

PORCÉDÈ POUR CONTRÔLER UN ARRANGEMENT DECAPTEUR DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2019 DE 102019203016**

(43) Veröffentlichungstag der Anmeldung:
**12.01.2022 Patentblatt 2022/02**

(73) Patentinhaber: **Robert Bosch GmbH**
**70442 Stuttgart (DE)**

(72) Erfinder:
• **BARTH, Michael**
**70188 Stuttgart (DE)**
• **STOLL, Oliver**
**73230 Kirchheim-Teck (DE)**
• **BRAUER, Ingo**
**71665 Vaihingen (DE)**
• **WOLFF, Janpeter**
**75449 Wurmberg (DE)**
• **FISCHER, Marc**
**73262 Reichenbach (DE)**
• **FALKENAU, Markus**
**70184 Stuttgart (DE)**

(56) Entgegenhaltungen:
**EP-A2- 0 460 498      JP-A- S52 138 981**
**JP-A- 2009 168 616**

## Beschreibung

Stand der Technik

Aus dem Stand der Technik sind zahlreiche Vorrichtungen zur Bestimmung eines Drucks eines fluiden Mediums bekannt, also von Flüssigkeiten und/oder Gasen.

Bei den Vorrichtungen kann es sich dabei insbesondere um mikromechanische Drucksensoren handeln, wie sie beispielsweise aus Konrad Reif (Hrsg.): Sensoren im Kraftfahrzeug, 2. Auflage 2012, Seiten 134-136 bekannt sind. Weitere Drucksensoren sind beispielsweise in WO2009/067449 A1 und DE10 2007 029 356 A1 offenbart.

WO2009/067449 A1 offenbart eine kombinierte Flüssigkeits- und Dampfdruck-Sensoranordnung, umfassend einen Körper und einen Montageabschnitt zum Koppeln des Körpers mit einem Kraftstoffpumpenmodul-Flansch welche eine Grenzfläche zwischen einer Innenseite und einer Außenseite eines Kraftstofftanks definiert. Ein Flüssigkeitsdrucksensor ist in einer Aussparung in dem Körper untergebracht, um einen Flüssigkeitsdruck eines Kraftstoffs in einem Kraftstofftank zu erfassen. Ein Dampfdrucksensor ist in der Aussparung in dem Körper untergebracht, um einen Dampfdruck eines Kraftstoffdampfs in dem Kraftstofftank zu erfassen. Ein elektrischer Verbinder ist mit dem Körper verbunden, um Leistung für den Flüssigkeitsdrucksensor und den Dampfdrucksensor bereitzustellen.

DE10 2007 029 356 A1 offenbart einen Differenzialdrucksensor. Der Differenzialdrucksensor weist ein Gehäuse, ein erstes und ein zweites Druckerfassungselement, einen ersten und einen zweiten Druckeinlasskanal und ein Differenzialdruckbestimmungselement auf. Die ersten und zweiten Druckerfassungselemente arbeiten, um jeweils einen ersten und einen zweiten Druck (A, B) zu erfassen. Die ersten und zweiten Druckeinlasskanäle sind vorgesehen, um jeweils den ersten und den zweiten Druckerfassungselementen den ersten und den zweiten Druck (A, B) zuzuführen. Das

Differenzialdruckbestimmungselement arbeitet, um aus der Differenz zwischen den ersten und zweiten Drücken, die durch die ersten und zweiten Erfassungselemente erfasst werden, einen Differenzialdruck zu bestimmen. Die ersten und zweiten Druckerfassungselemente weisen die gleiche Form und Größe auf und sind in dem Gehäuse hinsichtlich eines Bezugs symmetrisch angeordnet. Die ersten und zweiten Druckeinlasskanäle weisen auch die gleiche Form und Größe auf und sind in dem Gehäuse hinsichtlich des Bezugs symmetrisch positioniert.

Drucksensoren sind üblicherweise derart gestaltet, dass sie in einem vorgegebenen Druckbereich ein optimales Ergebnis mit hoher Reproduzierbarkeit liefern, so dass die Messgenauigkeit möglichst hoch ist. Bei den Sensoren kann es sich dabei beispielsweise um piezoresistive Drucksensoren handeln, bei denen eine Membran von dem zu messenden Druck beaufschlagt wird. Auf der Membran ist mindestens ein Dehnungsmesselement angebracht. Durch die Verformung der Membran unter Druck verformt sich das Dehnungsmesselement und ändert sich somit dessen Impedanz. Die Impedanz dient dabei der Bestimmung des Drucks. Um Temperatureinflüsse zu kompensieren, werden zumeist mehrere Messelemente mittels einer Brückenschaltung gekoppelt.

Das Signal der Brückenschaltung wird dann in einer Auswerteschaltung verarbeitet. Soll ein Sensor in einem bestimmten Druckbereich eingesetzt werden, so ist die Empfindlichkeit der Membran in einem Messsystem auf die Auswerteschaltung abzustimmen, um beispielsweise den ASIC eines A/D-Wandlers optimal auszunutzen. Hierzu wird der maximale Druck als Referenz verwendet. Dies hat zur Folge, dass im Teillastbereich die relative Abweichung in der Regel besonders hoch ist. Insbesondere ist ein Drucksensor wünschenswert, welcher in mehreren Messbereichen besonders genau misst.

JP 2009 168616 A und EP 0460498 A2 offenbaren Vorschläge zur Linearisierung der Kennlinie eines aus mehreren Messelementen bestehenden Drucksensors.

Offenbarung der Erfindung

Es wird daher ein Verfahren zum Betreiben einer Sensoranordnung nach Anspruch 1 vorgeschlagen.

Unter einer "Sensoranordnung" kann im Rahmen der vorliegenden Erfindung grundsätzlich eine beliebige Vorrichtung verstanden werden, welche den Druck bestimmen kann und welche beispielsweise mindestens ein Messsignal entsprechend des Drucks erzeugen kann, beispielsweise ein elektrisches Messsignal wie beispielsweise eine Spannung oder einen Strom.

Die Sensoranordnung kann insbesondere zum Einsatz in einem Kraftfahrzeug eingerichtet sein. Beispielsweise kann die Sensoranordnung zum Einsatz in einem Antriebsstrang und/oder einem Getriebe und/oder einem Thermomanagement-System eines Kraftfahrzeugs, beispielsweise eines Elektrofahrzeugs, eingerichtet sein. Auch andere Ausgestaltungsformen und Einsatzgebiete der Sensoranordnung sind jedoch grundsätzlich möglich.

Die Sensoranordnung zur Bestimmung des Drucks eines fluiden oder gasförmigen Mediums weist einen Druckstutzen auf, welcher eine Membran als Druckaufnehmer aufweist. Diese Membran wird im Betrieb mit dem fluiden oder gasförmigen Medium beaufschlagt. Die Sensoranordnung umfasst ein oder mehrere Sensormodule, welche wiederum einen oder mehrere Sensorchips aufweisen. Ein solcher Sensorchip verfügt über mindestens zwei Messelemente, welche auf der Membran angeordnet sind. Darüber hinaus verfügt die Sensoranordnung über mindestens eine Auswerteschaltung. Die Auswerteschaltung ist eingerichtet, mindestens zwei Signale der auf der Membran angeordneten mindestens zwei Messelemente) zu erfassen. Die mindestens zwei Messelemente sind mit jeweils einem separaten Verstärker verbunden. Die mindestens zwei Verstärker weisen unterschiedliche Verstärkungsfaktoren auf.

Hierdurch ist es grundsätzlich möglich, mittels eines Sensorchips das Signal der einzelnen Messelemente unterschiedlich zu verarbeiten. Damit kann man grundsätzlich einen Sensorchip für unterschiedliche Messbereiche optimal anpassen.

Vorteilhafte Ausgestaltungen ergeben sich durch die Merkmale des abhängigen Anspruchs.

So kann eine Signalauswerteschaltung, welche mit den Verstärkern verbunden ist, bedarfsgerecht die Signale verarbeiten. Da die Messelemente mit ihren individuellen Verstärkern für unterschiedliche Messbereiche optimiert sind, hat die Signalauswerteschaltung grundsätzlich die Aufgabe, situationsgerecht das geeignetere Signal auszuwählen und optional mittels des anderen Signals zu verifizieren. Letztendlich kann die Signalauswerteschaltung aus den Verstärkerausgangssignalen der Verstärker ein Ausgangssignal, errechnen welches dann die Auswerteschaltung verlässt.

Die unterschiedlichen Messelemente verfügen über einen gleichen Aufbau und können dennoch für unterschiedliche Messbereiche angepasst werden.

In der vorliegenden Erfindung wir ein Verfahren zum Betreiben einer Sensoranordnung zur Bestimmung des Drucks p eines fluiden oder gasförmigen Mediums vorgeschlagen. Die Sensoranordnung weist einen Druckstutzen auf. Der Druckstutzen weist eine mit dem fluiden oder gasförmigen Medium beaufschlagbare Membran als Druckaufnehmer auf. Die Sensoranordnung umfasst mindestens ein Sensormodul. Das Sensormodul weist mindestens einen Sensorchip auf. Der mindestens eine Sensorchip weist weiterhin mindestens zwei auf der Membran angeordnete Messelemente auf. Die Sensoranordnung weist weiterhin mindestens eine Auswerteschaltung auf. Die Auswerteschaltung erfasst die mindestens zwei Signale der auf der Membran angeordneten mindestens zwei Messelemente. Die mindestens zwei Messelemente sind mit jeweils einem separaten Verstärker verbunden. Die mindestens zwei Verstärker weisen unterschiedliche Verstärkungsfaktoren auf und die mindestens zwei Verstärker sind mit einer Signalauswerteschaltung verbunden. Die Signalauswerteschaltung errechnet aus den Verstärkerausgangssignalen der mindestens zwei Verstärker ein Ausgangssignal.

Die Signalauswerteschaltung erfasst die Verstärkerausgangssignale der mindestens zwei Verstärker und das Ausgangssignal der Signalauswerteschaltung wird in Abhängigkeit der Verstärkerausgangssignale der mindestens zwei Verstärker 2. errechnet.

Die Signalauswerteschaltung kann die Verstärkerausgangssignale der mindestens zwei Verstärker erfassen und wenn alle Verstärkerausgangssignale einen vorgegebenen unteren Schwellwert SG2 unterschreiten, das größte Verstärkerausgangssignal unter Verwendung einer Geringdruckfunktion zur Errechnung des Ausgangssignals der Signalauswerteschaltung verwenden. Die Signalauswerteschaltung kann aus den Verstärkerausgangssignalen der Verstärker also ein Ausgangssignal errechnen. Hierzu kann die Signalauswerteschaltung die Verstärkerausgangssignale der Verstärker erfassen und mit dem vorgegebenen unteren Schwellwert vergleichen. Wenn alle Verstärkerausgangssignale einen vorgegebenen unteren Schwellwert unterschreiten, ist dies gleichbedeutend mit dem Vorliegen eines geringen Drucks. Das Messelement, welches mit dem Verstärker mit dem größten Verstärkungsfaktor verbunden ist, ist in diesem Fall am besten für eine Messung geeignet. Die Signalauswerteschaltung verwendet daher grundsätzlich das größte Verstärkerausgangssignal und verwendet eine dazugehörige Geringdruckfunktion zur Errechnung des Ausgangssignals der Signalauswerteschaltung.

Die Signalauswerteschaltung kann die Verstärkerausgangssignale der mindestens zwei Verstärker erfassen und wenn alle Verstärkerausgangssignale einen vorgegebenen oberen Schwellwert SG1 überschreiten, das kleinste Verstärkerausgangssignal unter Verwendung einer Hochdruckfunktion zur Errechnung des Ausgangssignals der Signalauswerteschaltung verwenden. Die Signalauswerteschaltung kann also die Verstärkerausgangssignale der Verstärker erfassen und mit dem oberen Schwellwert vergleichen. Wenn alle Verstärkerausgangssignale den vorgegebenen oberen Schwellwert überschreiten, so ist dies gleichbedeutend mit dem Vorliegen eines hohen Drucks. Das Messelement, welches mit dem Verstärker mit dem kleinsten Verstärkungsfaktor verbunden ist, ist in diesem Fall grundsätzlich am besten für eine Messung geeignet. Die Signalauswerteschaltung verwendet daher das kleinste Verstärkerausgangssignal und verwendet eine dazugehörige Hochdruckfunktion zur Errechnung des Ausgangssignals der Signalauswerteschaltung.

Die Sensoranordnung kann genau zwei Messelementen umfassen. Erfindungsgemäß erfasst die Signalauswerteschaltung die Verstärkerausgangssignale der zwei Verstärker erfassen und wenn beide Verstärkerausgangssignale einen vorgegebenen Schwellwert SG1 überschreiten, kann das kleinere Verstärkerausgangssignal unter Verwendung einer Hochdruckfunktion zur Errechnung des Ausgangssignals der Signalauswerteschaltung verwendet werden und ansonsten kann das größere Verstärkerausgangssignal unter Verwendung einer Niederdruckfunktion zur Errechnung des Ausgangssignals der Signalauswerteschaltung verwendet werden. Verfügt die Sensoranordnung über genau zwei Messelemente, so erfasst die Signalauswerteschaltung erfindungsgemäß die Verstärkerausgangssignale der beiden Verstärker und vergleicht diese mit genau einem ersten Schwellwert. Wenn beide Verstärkerausgangssignale diesen vorgegebenen, ersten Schwellwert überschreiten, so wird gemäß einer ersten Variante das kleinere Verstärkerausgangssignal unter Verwendung einer Hochdruckfunktion zur Errechnung des Ausgangssignals der Signalauswerteschaltung verwendet werden. Solange beide Verstärkerausgangssignale diesen vorgegebenen, ersten Schwellwert nicht überschreiten wird grundsätzlich das größere Verstärkerausgangssignal unter Verwendung einer Niederdruckfunktion zur Errechnung des Ausgangssignals der Signalauswerteschaltung verwendet.

Wenn, gemäß einer zweiten Variante, beide Verstärkerausgangssignale einen vorgegebenen Schwellwert SG2 unterschreiten, wird das größere Verstärkerausgangssignal unter Verwendung einer Niederdruckfunktion zur Errechnung des Ausgangssignals der Signalauswerteschaltung verwendet werden. Ansonsten wird in der zweiten Variante das kleinere Verstärkerausgangssignal unter Verwendung einer Hochdruckfunktion zur Errechnung des Ausgangssignals der Signalauswerteschaltung verwendet werden. Die Signalauswerteschaltung kann ebenfalls die Verstärkerausgangssignale der zwei Verstärker erfassen und mit genau einem vorgegebenen, zweiten Schwellwert vergleichen. Wenn beide Verstärkerausgangssignale also diesen vorgegebenen, zweiten Schwellwert unterschreiten, wird das größere Verstärkerausgangssignal unter Verwendung einer Niederdruckfunktion zur Errechnung des Ausgangssignals der Signalauswerteschaltung verwendet. Solange beide Verstärkerausgangssignale diesen vorgegebenen, zweiten Schwellwert nicht unterschreiten wird das kleinere Verstärkerausgangssignal unter Verwendung einer Hochdruckfunktion zur Errechnung des Ausgangssignals der Signalauswerteschaltung verwendet.

Der vorgegebene, erste Schwellwert und der vorgegebene, zweite Schwellwert sind grundsätzlich nicht identisch. Der vorgegebene, erste Schwellwert kann größer sein als der vorgegebene, zweite Schwellwert. Soll jeweils beim gleichen Druck umgeschaltet werden, so ergeben sie sich aus den Kennlinien der Verstärkerausgangssignale.

Der Sensorchip kann weiterhin über mindestens ein drittes auf der Membran angeordnetes Messelement verfügen, welches mit wiederum einem separaten Verstärker in der Auswerteschaltung verbunden ist. Die Signalauswerteschaltung kann die Verstärkerausgangssignale der mindestens drei Verstärker erfassen und in Abhängigkeit der Verstärkerausgangssignale ein Verstärkerausgangssignal unter Verwendung einer zugeordneten Druckfunktion zur Errechnung des Ausgangssignals der Auswerteschaltung verwenden. Verfügt die Sensoranordnung also über mindestens drei auf der Membran angeordnete Messelemente, welche allesamt mit einem separaten Verstärker mit individuellem Verstärkungsfaktor in der Auswerteschaltung verbunden sind, kann die Signalauswerteschaltung die Verstärkerausgangssignale der mindestens drei Verstärker umfassen. In Abhängigkeit der verschiedenen Verstärkerausgangssignale kann ein Verstärkerausgangssignal mit einer zugeordneten Druckfunktion verwendet werden und das Ausgangssignal der Auswerteschaltung errechnet werden.

Die Signalauswerteschaltung kann die Verstärkerausgangssignale mehrerer Verstärker mit der jeweils dazugehörigen Druckfunktion verarbeiten und die Ergebnisse miteinander vergleichen, wobei beim Überschreiten einer vorgegebenen Differenz ein Warnsignal ausgegeben wird. Letztendlich kann also optional ein Plausibilitätscheck erfolgen, bei dem die Signalauswerteschaltung die Verstärkerausgangssignale mehrerer Verstärker mit der jeweils dazugehörigen Druckfunktion verarbeitet. Unter idealen Bedingungen sollten alle Ergebnisse gleich sein. Durch die konkrete Auslegung und Fertigungstoleranzen unterscheiden sich die Ergebnisse jedoch. Weichen die Ergebnisse signifikant voneinander ab, was durch das Überschreiten einer vorgegebenen Differenz erkannt wird, so ist dies ein Indiz für einen vorliegenden Fehler, so dass ein Warnsignal ausgegeben wird.

Im Rahmen der vorliegenden Erfindung kann grundsätzlich unter einer "Sensoranordnung" eine beliebige Vorrichtung verstanden werden, welche den Druck bestimmen kann und welche beispielsweise mindestens ein Messsignal entsprechend des Drucks erzeugen kann, beispielsweise ein elektrisches Messsignal wie beispielsweise eine Spannung oder einen Strom. Die Sensoranordnung kann insbesondere zum Einsatz in einem Kraftfahrzeug eingerichtet sein. Beispielsweise kann die Sensoranordnung zum Einsatz in einem Antriebsstrang und/oder einem Getriebe und/oder einem Thermomanagement-System eines Kraftfahrzeugs, beispielsweise eines Elektrofahrzeugs, eingerichtet sein. Auch andere Ausgestaltungsformen und Einsatzgebiete der Sensoranordnung sind jedoch grundsätzlich möglich.

Insbesondere kann die Sensoranordnung eingerichtet sein einen innerhalb eines Druckbereichs liegenden Druck p des fluiden Mediums zu bestimmen, insbesondere zu messen. Beispielsweise kann es sich bei dem Druckbereich um einen Bereich $0 \leq p \leq 100$ bar, bevorzugt um einen Bereich $0 \leq p \leq 50$ bar, besonders bevorzugt um einen Bereich $0 \leq p \leq 20$ bar, handeln. Insbesondere kann die Sensoranordnung eingerichtet sein den Druck p innerhalb des genannten Druckbereichs mit einer maximal zulässigen Abweichung des Messergebnisses von dem tatsächlich herrschenden Druck zu bestimmen. Die zulässige maximale Abweichung kann dabei beispielsweise in % des tatsächlich herrschenden Drucks, beispielsweise des Nenndrucks des fluiden Mediums, angegeben werden. Insbesondere kann die Sensoranordnung eingerichtet sein den Druck p des fluiden Mediums mit einer maximalen Abweichung von 0 % bis einschließlich 3 %, bevorzugt einer maximalen Abweichung von 0 % bis einschließlich 2 %, mehr bevorzugt einer maximalen Abweichung von 0 % bis einschließlich 1 %, besonders bevorzugt einer maximalen Abweichung von 0 % bis einschließlich 0,5 %, zu bestimmen. Beispielsweise kann die Sensoranordnung eingerichtet sein einen Druck innerhalb eines niedrigen Druckbereich, insbesondere einen Druckbereich von 0 bar bis 2 bar, und eines hohen Druckbereich, insbesondere einen Druckbereich von 15 bar bis 20 bar, zu bestimmen. Beispielsweise kann die Sensoranordnung eingerichtet sein den Druck des fluiden Mediums in dem Bereich von 0 bar bis 2 bar mit einer Abweichung von 0 bar bis 0,08 bar zu bestimmen. Beispielsweise kann die Sensoranordnung weiterhin eingerichtet sein den Druck des fluiden Mediums in dem Bereich von 15 bar bis 20 bar mit einer Abweichung von 0 bar bis 0,3 bar zu bestimmen.

Unter einem "Druckaufnehmer" kann im Rahmen der vorliegenden Erfindung grundsätzlich ein Bauteil verstanden werden, welches eingerichtet ist einen Druck des fluiden Mediums aufzunehmen. Insbesondere kann der Druckaufnehmer mindestens eine, vorzugsweise mehrere, Messoberflächen, aufweisen. Beispielsweise kann der Druckaufnehmer als die Membran des Sensormoduls ausgebildet sein, welche eingerichtet ist, um mit dem fluiden Medium aus dem Druckstutzen beaufschlagt zu werden.

Unter einer "Membran" kann im Rahmen der vorliegenden Erfindung grundsätzlich eine beliebige dünne Trennschicht verstanden werden, welche eine biaxial gespannte Fläche bildet. Beispielsweise kann die Membran derart angeordnet sein, dass sie sich durch den Druck des fluiden Mediums elastisch verformt, also eine reversible Formänderung aufweisen. Insbesondere kann eine Ausprägung der Verformung der Membran abhängig sein von dem Druck des fluiden Mediums. Beispielsweise, kann die Formänderung der Membranen mit dem Druck des fluiden Mediums korrelieren.

Unter einem "Druckstutzen" kann im Rahmen der vorliegenden Erfindung grundsätzlich ein Element verstanden werden, welches mindestens zwei Enden aufweist die durch einen Hohlraum miteinander verbunden sind, beispielsweise ein Rohr, und welches eingerichtet ist einen Druck mittels einer Flüssigkeit und/ oder eines Gases, vorzugsweise mittels des fluiden Mediums, von einem ersten Ende des Druckstutzens an mindestens ein zweites Ende des Druckstutzens zu führen. Insbesondere kann der Druckstutzen dabei eingerichtet sein, Formstabilität aufzuweisen, also seine geometrische Form auch bei Belastung durch den Druck des Fluids beizubehalten. Insbesondere kann der Druckstutzen ein Material umfassen, welches eine höhere Festigkeit aufweist, als der durch das fluide Medium aufgebrachte oder aufbringbare Druck. Hierbei kann der Druckstutzen bevorzugt aus Aluminium oder Messing gefertigt sein. In ebenso vorteilhafter Weise ist auch eine Fertigung des Druckstutzens aus einer Aluminiumlegierung oder einer Messinglegierung oder einer anderen Leichtmetalllegierung denkbar. Insbesondere kann der Druckstutzen auch aus einem beliebigen anderen formstabilen Material gefertigt sein. Insbesondere kann der Druckstutzen einen für das fluide Medium zugänglichen Innenraum, eine Bohrung, beispielsweise eine Zylinderbohrung, aufweisen. Der Innenraum kann dabei über eine Druckzuführung mit der Membran des Sensormoduls verbunden sein. Beispielsweise kann der Innenraum derart mit der Membran des Sensormoduls verbunden sein, dass die Membran mit dem fluiden Medium, vorzugsweise mit dem gleichen fluiden Medium und/oder dem gleichen Druck, beaufschlagt werden kann.

Unter einer "Druckzuführung" kann im Rahmen der vorliegenden Erfindung grundsätzlich ein beliebiges Kanalsystem verstanden werden, welches eingerichtet ist, um ein fluides Medium an eine definierte Stelle zu führen, vorzugsweise ohne dabei den Druck des fluiden Mediums zu beeinflussen. Beispielsweise kann eine Druckzuführung mindestens einen Eingang und einen Ausgang aufweisen. Insbesondere kann die Druckzuführung ausgebildet sein, um ein fluides Medium von dem Eingang der Druckzuführung an den Ausgang der Druckzuführung zu leiten ohne dabei den Druck des fluiden Mediums zu verändern.

Das Sensormodul kann sowohl mittig auf der Membran positioniert sein, um ein möglichst großes Sensorsignal zu generieren oder auch am Rande, um ein möglichst kleines Sensorsignal durch die geringere Verformung am Rande zu generieren.

Bei den Verstärkern mit unterschiedlichen Verstärkungsfaktoren kann es sich um identische Verstärker, oder auch unterschiedliche Bauelemente handeln. Wesentlich ist, dass sie gleichartige Eingangssignale unterschiedlich weiterverarbeiten, wobei in der Regel bei gleichem Eingangssignal das Verstärkerausgangssignal eines Verstärkers ein Vielfaches beziehungsweise ein Bruchteil des Verstärkerausgangssignal eines anderen Verstärkers ist.

Beispielsweise kann der erste Verstärker ausgelegt sein für einen Druckbereich von 0 bar bis einschließlich 100 bar, vorzugsweise von einschließlich 2 bar bis einschließlich 60 bar, mehr bevorzugt von einschließlich 5 bar bis einschließlich 50 bar, besonders bevorzugt von einschließlich 7 bar bis einschließlich 40 bar. Weiterhin kann der zweite Verstärker ausgelegt sein für einen Druckbereich von 0 bar bis einschließlich 20 bar, vorzugsweise von 0 bar bis einschließlich 15 bar, mehr bevorzugt von 0 bar bis einschließlich 10 bar, besonders bevorzugt von 0 bar bis einschließlich 5 bar.

Das Sensormodul weißt mindestens einen Sensorchip auf. Der Sensorchip weißt mindestens zwei Messelemente auf. Unter einem "Sensorchip" kann im Rahmen der vorliegenden Erfindung grundsätzlich ein beliebiges Element mit mindestens einer Sensorfunktion verstanden werden. Insbesondere kann der Sensorchip einstückig ausgestaltet sein und kann beispielsweise als Halbleiterchip oder als keramischer Chip ausgestaltet sein. Der Sensorchip kann beispielsweise die mindestens eine Membran aufweisen. Vorzugsweise können die Messelemente auf der mindestens einen Membran des Sensorchips angeordnet sein. Insbesondere kann das Messelement eine Messbrücke aus einer resistiven Schicht aufweisen, beispielsweise eine sogenannte Wheatstone'sche Brücke. Alternativ oder zusätzlich kann es sich bei dem mindestens einen Messelement auch um ein kapazitives Messelement handeln.

Unter einem "Messelement" kann im Rahmen der vorliegenden Erfindung grundsätzlich ein beliebiges Element verstanden werden, welches eingerichtet ist, um eine physikalische Veränderung, beispielsweise eine Dehnung und/oder Spannung, durch ein elektrisches Signal, beispielsweise eine Änderung einer elektrischen Spannung und/oder einen Strom, anzuzeigen oder zu indizieren. Die Messelemente können dabei eingerichtet sein jeweils ein Signal zu erzeugen. Insbesondere können die Messelemente dazu eingerichtet sein ein elektrisches Signal, beispielsweise durch Änderung des elektrischen Widerstandes, zu erzeugen. Das Signal kann eine Korrelation zu dem Druck des fluiden Mediums aufweisen. Beispielsweise kann das Signal abhängig sein von dem Druck des fluiden oder gasförmigen Mediums. Vorzugsweise können die Messelemente eingerichtet sein jeweils ein Signal zu erzeugen, welches eine proportionale Abhängigkeit zu dem Druck des fluiden Mediums aufweist.

Der Sensorchip kann weiterhin mindestens einen Hohlraum umfassen.

Insbesondere kann der Sensorchip den Hohlraum vollständig einschließen und/oder umschließen. Vorzugsweise kann der Sensorchip den Hohlraum derart umschließen, dass jeweils mindestens eine Wand des Hohlraums die mindestens eine Membran umfasst. Insbesondere kann in dem Hohlraum ein Unterdruck, beispielsweise ein geringerer Druck als in der unmittelbaren Umgebung des Sensorchips, herrschen. Beispielsweise kann der Hohlraum ein Vakuum umfassen. Insbesondere kann im inneren des Hohlraums ein Unterdruck existieren.

Weiterhin weißt die Sensoranordnung die mindestens eine Auswerteschaltung auf, welche dazu eingerichtet ist, die mindestens zwei Signale der mindestens zwei Messelemente zu erfassen. Die Auswerteschaltung ist dazu eingerichtet die Signale von mindestens zwei Messelementen zu erfassen welche jeweils auf einer Membran angeordnet sind. Unter einer "Auswerteschaltung" kann im Rahmen der vorliegenden Erfindung grundsätzlich eine beliebige Schaltung verstanden werden, welche eingerichtet ist mindestens ein Signal aufzunehmen und mindestens eine Information aus dem Signal abzuleiten. Insbesondere kann die Auswerteschaltung eine Mehrzahl von Leitungen, insbesondere logisch miteinander verknüpfte elektrisch leitende Leiterbahnen, aufweisen. Beispielsweise kann es sich bei der Auswerteschaltung um eine elektronische Schaltung, einen Prozessor, einen integrierten Schaltkreis, beispielsweise eine anwendungsspezifische integrierte Schaltung (ASIC), oder eine vergleichbare Schaltung handeln. Insbesondere kann die Auswerteschaltung eingerichtet sein eine aus dem mindestens einen Signal gewonnene Information weiterzuleiten. Beispielsweise kann es sich bei dem von der Auswerteschaltung weiterzuleitenden Ausgangssignal um ein digitales Ausgangssignal, beispielsweise LIN oder SENT, oder alternativ um ein analoges Ausgangssignal, beispielsweise ein radiometrisches Ausgangssignal, handeln.

Die Signalauswerteschaltung kann insbesondere eingerichtet sein, die Signale der Verstärker wechselweise auszuwerten. Unter einer "wechselweisen Auswertung" von Signalen kann im Rahmen der vorliegenden Erfindung grundsätzlich eine alternierende Interpretation der Signale verstanden werden. Beispielsweise kann es sich bei einer wechselweisen Auswertung von zwei Signalen um eine abwechselnde Untersuchung der Signale handeln. Insbesondere kann eine wechselweise Auswertung zweier Signale eine zeitlich versetzte Auswertung, insbesondere eine nicht gleichzeitig stattfindende Auswertung, handeln. Beispielsweise kann unter einer wechselweisen Auswertung zweier Signale verstanden werden, dass eine Auswertung eines ersten Signals einer Auswertung eines zweiten Signals vorausgeht, wobei jeweils ausschließlich eines der beiden Signale ausgewertet wird, insbesondere keine gleichzeitige Auswertung der beiden Signale durchgeführt wird. Ein erstes Signal wird dann beispielsweise gespeichert und danach mit dem später generierten zweiten Signal verarbeitet.

Auch kann das Erreichen des Schwelldrucks einen Wechsel in der Auswertung auslösen, beispielsweise einen Wechsel von einem Auswerten des ersten Signals zu einem Auswerten des zweiten Signals.

Die Auswerteschaltung kann weiterhin eingerichtet sein, die Signale beider Messelemente beziehungsweise Verstärker gleichzeitig auszuwerten. Insbesondere kann beispielsweise eine zeitgleiche Auswertung der Signale der Messelemente mittels der Auswerteschaltung durchgeführt werden. Insbesondere kann die Auswerteschaltung eingerichtet sein die Signale der Messelemente der Messelemente beziehungsweise Verstärker abhängig von einem durch eine Ansteuer- und Auswerteeinheit erzeugten Steuersignal auszuwerten. Beispielsweise kann das von der Ansteuer- und Auswerteeinheit erzeugte Steuersignal die mit Hilfe der Auswerteschaltung durchgeführte Auswertung der Signale beeinflussen. Insbesondere kann das Steuersignal die Auswertung der von den unterschiedlichen Messelementen erzeugten Signale steuern. Beispielsweise kann ein Vorgehen der Auswerteschaltung bei der Auswertung der Signale und/oder ein Ablauf der Auswertung der Signale mit Hilfe der Auswerteschaltung von dem Steuersignal beeinflusst werden. Unter einer "Ansteuer- und Auswerteeinheit" kann im Rahmen der vorliegenden Erfindung grundsätzlich ein beliebiges System verstanden werden, welches eingerichtet ist eine Aufnahme und/oder Auswertung beliebiger Signale zu steuern. Insbesondere kann die Ansteuer- und Auswerteeinheit eingerichtet sein, um eine Auswertung, beispielsweise eine Auswertung unter Verwendung einer Auswerteeinheit, zu überwachen. Beispielsweise kann die Ansteuer- und Auswerteschaltung insbesondere ein Steuergerät, einen Computer, einen Prozessor oder ein ähnliches System umfassen.

Vorteile der Erfindung

Das vorgeschlagene Verfahren weißt gegenüber bekannten Verfahren zahlreiche Vorteile auf. Es lassen sich grundsätzlich Messungen in verschiedenen Druckbereichen durchführen. Dadurch ist es grundsätzlich möglich, geringe Toleranzen der Druckmessung sowohl in einem unteren Druckbereich als auch in einem oberen Druckbereich zu realisieren. Durch einen Einsatz von jeweils einen separaten Verstärker für ein Messelement, insbesondere für eine Separierung von pfaden, kann ein höherer Grad einer Unabhängigkeit der Signale geschaffen werden. Dies kann zu einem besseren Plausibilitätsverhalten führen. Darüber hinaus kann durch eine Entkopplung der Signale ein Übersprechen zwischen Kanälen verhindert werden und eine elektromagnetische Verträglichkeit kann verbessert werden.

Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.
Es zeigen:

Figur 1 ein Ausführungsbeispiel einer Sensoranordnung in einer Schnittdarstellung einer Draufsicht;

Figur 2 Kennlinien einer Sensoranordnung, wie sie im erfindungsgemäßen Verfahren verwendet wird, mit zwei Messelementen; sowie

Figur 3 Kennlinien einer Sensoranordnung, wie sie im erfindungsgemäßen Verfahren verwendet wird, mit drei Messelementen.

Ausführungsformen der Erfindung

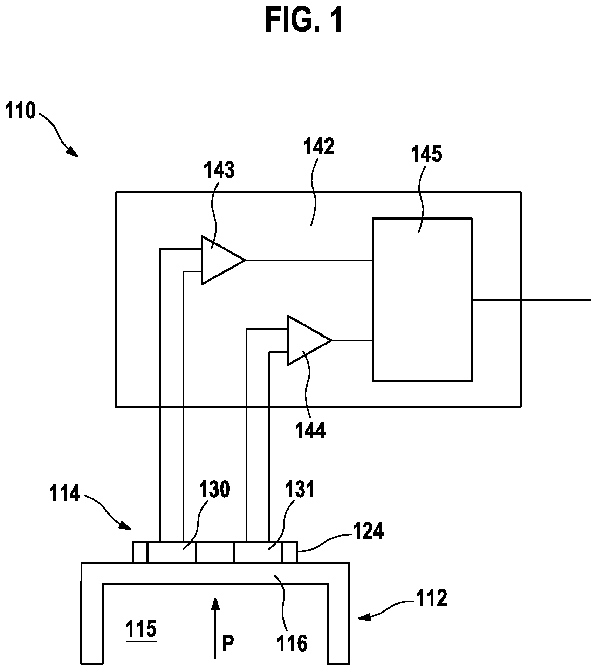

Figur 1 zeigt eine Sensoranordnung 110 mit einen Druckstutzen 112, bei welchem ein mit einem fluiden oder gasförmigen Medium unter dem Druck p gefüllter Raum 115 von einer Membran 116 abgeschlossen wird. Mit der Membran 116 ist ein Sensormodul 114 mit einem Sensorchip 124 formschlüssig verbunden. Der Sensorchip 124 weist zwei auf der Membran 116 angeordnete im wesentlichen gleich aufgebaute Messelemente 130, 131 auf. Die Sensoranordnung 110 verfügt über eine Auswerteschaltung 142. In dieser Auswerteschaltung 142 befinden sich zwei Verstärker 143, 144, von denen jeweils ein Verstärker 143, 144 mit einem Messelemente 130, 131 verbunden ist. Die beiden Verstärker 143, 144 verfügen über unterschiedliche Verstärkungsfaktoren. Ausgangsseitig sind die beiden Verstärker 143, 144 in der Auswerteschaltung 142 mit einer Signalauswerteschaltung 145 verbunden. Die Signalauswerteschaltung 145 errechnet aus den Verstärkerausgangssignalen der mindestens zwei Verstärker 143, 144 ein Ausgangssignal.

Im Betrieb wird die Membran 116 mit dem Druck p beaufschlagt, wodurch diese mitsamt den Messelemente 130, 131 verformt wird. Die Signale der beiden Messelemente 130, 131 sind - abgesehen von Fertigungstoleranzen - gleich und werden getrennt an die beiden Verstärker 143, 144 weitergeleitet. In den beiden Verstärkern 143, 144 werden die Signale der beiden Messelemente 130, 131 mit unterschiedlichen Verstärkungsfaktoren weiterverarbeitet, so dass das Verstärkerausgangssignal des zweiten Verstärkers 143 besonders für die Erfassung großer Drücke und das Verstärkerausgangssignal des ersten Verstärkers 144 besonders für die Erfassung kleinerer Drücke geeignet ist. In der Signalauswerteschaltung 145 werden beide Verstärkerausgangssignale der beiden Verstärker 143, 144 dahingehend untersucht, ob ein großer oder kleiner Druck p vorliegt. Dementsprechend wird das Verstärkerausgangssignal des für den vorliegenden Druck besser geeigneten Verstärkers 143, 144 ausgewählt und ein Ausgangssignal, welches dem Druck im Raum 115 entspricht, errechnet und ausgegeben.

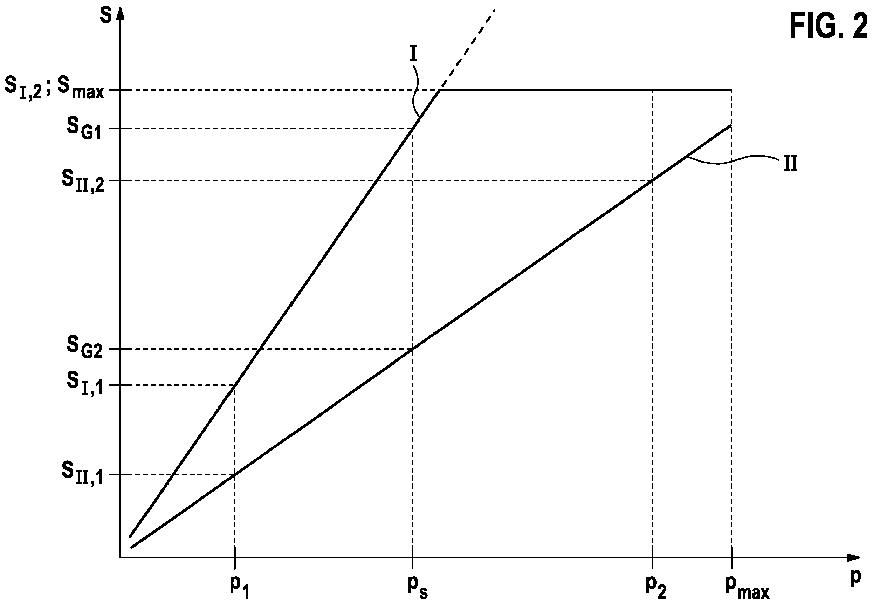

Figur 2 zeigt Kennlinien der Verstärkerausgangssignale. Mit I ist eine steile Kennlinie des Signals des Messelements 131 gekennzeichnet, welche in dem zugeordneten ersten Verstärker 144 mit einem großen Verstärkungsfaktor verarbeitet wurde. Mit II ist eine flache Kennlinie des Signals des Messelements 130 gekennzeichnet, welches in dem zugeordneten zweiten Verstärker 143 mit einem kleineren Verstärkungsfaktor verarbeitet wurde. Die Sensoranordnung 110 ist auf einen maximalen Druck $p_{max}$ ausgelegt. Beide Verstärker 143, 144 können ein Signal von maximal $S_{max}$ erzeugen.
Bei einem relativ geringen Druck $p_1$ erzeugt der erste Verstärker 144 gemäß Kennlinie I ein relativ hohes Signal $S_{I,1}$, während der zweite Verstärker 143 gemäß Kennlinie II ein kleineres Signal $S_{II,1}$ generiert. Da es Ziel der Erfindung ist, ein möglichst großes Signal zu verarbeiten, werden beide Signale $S_{I,1}$, $S_{II,1}$ der Signalauswerteschaltung 145 zugeführt und mit einem ersten Schwellwert $S_{G1}$ verglichen. Da beide Signale $S_{I,1}$, $S_{II,1}$ kleiner als der erster Schwellwert $S_{G1}$ sind, wird das größere Signal $S_{I,i}$ in der Signalauswerteschaltung 145 mit einer entsprechenden Funktion für den ausgewählten Verstärker bearbeitet, so dass die Signalauswerteschaltung 145 ein dem Druck $p_1$ entsprechendes Signal ausgeben kann.

$$P_1 = f_I (S_{I,1})$$

Bei einem größeren Druck $p_2$ erzeugt der erste Verstärker 144 gemäß Kennlinie I ein relativ hohes Signal $S_{I,2}$, während der zweite Verstärker 143 gemäß Kennlinie II ein kleineres Signal $S_{II,2}$ generiert. Da das Ausgangssignal $S_{max}$ nicht überschreiten kann, entspricht in diesem Fall $S_{I,2}$, dem Maximum $S_{max}$. Auch hier werden beide Signale $S_{I,2}$, $S_{II,2}$ der Signalauswerteschaltung 145 zugeführt und mit dem ersten Schwellwert $S_{G1}$ verglichen. Da das Signale $S_{I,2}$ größer als der erste Schwellwert $S_{G1}$ ist, wird das kleinere Signal $S_{II,2}$ in der Signalauswerteschaltung 145 mit einer entsprechenden Funktion für den ausgewählten Verstärker bearbeitet, so dass die Signalauswerteschaltung 145 ein dem Druck $p_2$ entsprechendes Signal ausgeben kann.

$$P_2 = f_{II}\,(S_{II,2})$$

Statt des ersten Schwellwertes $S_{G1}$, kann alternativ ein zweiter Schwellwertes $S_{G2}$ zum Einsatz kommen. Bei gleichbleibendem Schaltdruck $p_s$ stellen sich auf der Kennlinie I der erste Schwellwert $S_{G1}$ sowie auf der Kennlinie der zweite Schwellwert $S_{G2}$ ein. Bei Verwendung des zweiten Schwellwertes $S_{G2}$ findet die Kennlinie II in Verbindung mit dem zweiten Messelement 132 und dem zweiten Verstärker 143 solange Verwendung, wie die Verstärkerausgangssignale der beiden Verstärkers 143, 144 den zweiter Schwellwertes $S_{G2}$ überschreiten. Sobald der Druck abnimmt und hierbei das Verstärkerausgangssignal des zweiten Verstärkers 143 den zweiter Schwellwertes $S_{G2}$ unterschreiten wird die Kennlinie I in Verbindung mit dem ersten Messelement 131 und dem ersten Verstärker 144 verwendet.

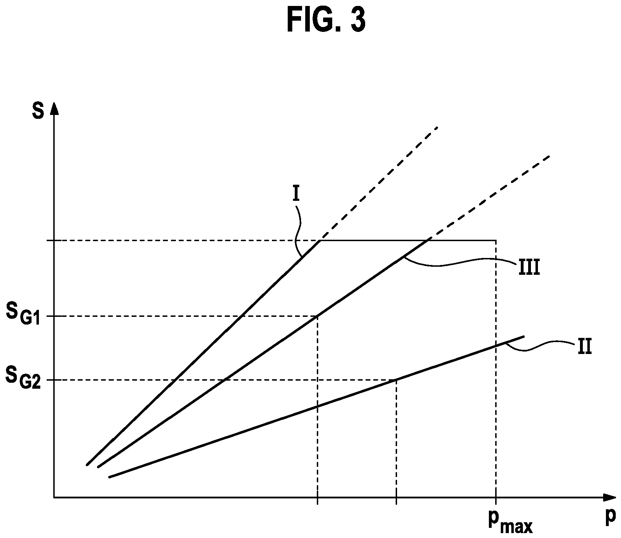

Figur 3 zeigt Kennlinien einer erfindungsgemäßen Sensoranordnung mit drei Messelementen. Überschreiten alle Verstärkerausgangssignale einen bestimmten Grenzwert, so wird die flachste Kennlinie II gewählt; unterschreiten alle Verstärkerausgangssignale einen bestimmten, anderen Grenzwert, so wird die steilste Kennlinie I gewählt. Dazwischen wird die dritte Kennlinie III gewählt.

Erfindungsgemäß können auch mehr als drei Messelemente mit einem entsprechenden Algorithmus Verwendung finden.

Bei allen beschriebenen Verfahren kann eine Plausibilitätsprüfung erfolgen. Hierbei wird der Druck nicht nur anhand der ausgewählten Kennlinie beziehungsweise anhand des gewählten Algorithmus ermittelt, sondern zur Kontrolle auch mittels einer anderen Kennlinie und dem dieser Kennlinie zugeordneten Messelement und Verstärker. Überschreitet die Differenz einen vorgegebenen Betrag, so ist dies ein Indiz für einen Fehler und in Warnsignal kann ausgegeben werden.

**Patentansprüche**

1. Verfahren zum Betreiben einer Sensoranordnung (110) zur Bestimmung mindestens eines Drucks p eines fluiden oder gasförmigen Mediums, wobei die Sensoranordnung (110) einen Druckstutzen (112) aufweist, wobei der Druckstutzen (112) eine mit dem fluiden oder gasförmigen Medium beaufschlagbare Membran (116) als Druckaufnehmer aufweist, wobei die Sensoranordnung (110) mindestens ein Sensormodul (114) umfasst, wobei das Sensormodul (114) mindestens einen Sensorchip (124) aufweist, wobei die Sensoranordnung (110) mindestens zwei auf der Membran (116) angeordnete Messelemente (130, 131) aufweist, wobei die Sensoranordnung (110) weiterhin mindestens eine Auswerteschaltung (142) aufweist, wobei die Auswerteschaltung (142) mindestens zwei Signale der auf der Membran (116) angeordneten mindestens zwei Messelemente (130, 131) erfasst, die mindestens zwei Messelemente (130, 131) mit jeweils einem separaten Verstärker (143, 144) verbunden sind, die Verstärker (143, 144) unterschiedliche Verstärkungsfaktoren aufweisen, die Verstärker (143, 144) mit einer Signalauswerteschaltung (145) verbunden sind, die Signalauswerteschaltung (145) die Verstärkerausgangssignale der Verstärker (143, 144) erfasst und das Ausgangssignal der Signalauswerteschaltung (145) in Abhängigkeit der Verstärkerausgangssignale der Verstärker (143, 144) errechnet, wobei genau zwei Messelemente (130, 131) vorgesehen sind und die zwei Messelemente (130, 131) über einen gleichen Aufbau verfügen, **dadurch gekennzeichnet, dass** der mindestens eine Sensorchip (124) die zwei auf der Membran (116) angeordneten Messelemente (130, 131) aufweist, und dass,

    wenn beide Verstärkerausgangssignale einen vorgegebenen Schwellwert (SG1) überschreiten, das kleinere Verstärkerausgangssignal unter Verwendung einer Hochdruckfunktion zur Errechnung des Ausgangssignals der Signalauswerteschaltung (145) verwendet wird und ansonsten das größere Verstärkerausgangssignal unter Verwendung einer Niederdruckfunktion zur Errechnung des Ausgangssignals der Signalauswerteschaltung (145) verwendet wird oder
    wenn beide Verstärkerausgangssignale einen vorgegebenen Schwellwert (SG2) unterschreiten, das größere Verstärkerausgangssignal unter Verwendung einer Niederdruckfunktion zur Errechnung des Ausgangssignals der Signalauswerteschaltung (145) verwendet wird und ansonsten das kleinere Verstärkerausgangssignal unter Verwendung einer Hochdruckfunktion zur Errechnung des Ausgangssignals der Signalauswerteschaltung (145) verwendet wird.

2. Verfahren zum Betreiben einer Sensoranordnung (110) nach Anspruch 1, **dadurch gekennzeichnet, dass** die Signalauswerteschaltung (145) die Verstärkerausgangssignale der beiden Verstärker (143, 144) mit der jeweils dazugehörigen Druckfunktion verarbeitet und die Ergebnisse miteinander vergleicht, wobei beim Überschreiten einer vorgegebenen Differenz ein Warnsignal ausgegeben wird.

**Claims**

1. Method for operating a sensor arrangement (110) for determining at least a pressure p of a fluid or gaseous medium, wherein the sensor arrangement (110) has a pressure connecting piece (112), wherein the pressure connecting piece (112) has a diaphragm (116), to which the fluid or gaseous medium can be applied, as a pressure sensor, wherein the sensor arrangement (110) comprises at least one sensor module (114), wherein the sensor module (114) has at least one sensor chip (124), wherein the sensor arrangement (110) has at least two measurement elements (130, 131) arranged on the diaphragm (116), wherein the sensor arrangement (110) also has at least one evaluation circuit (142), wherein the evaluation circuit (142) captures at least two signals from the at least two measurement elements (130, 131) arranged on the diaphragm (116), the at least two measurement elements (130, 131) are each connected to a separate amplifier (143, 144), the amplifiers (143, 144) have different gain factors, the amplifiers (143, 144) are connected to a signal evaluation circuit (145), the signal evaluation circuit (145) captures the amplifier output signals from the amplifiers (143, 144) and calculates the output signal from the signal evaluation circuit (145) on the basis of the amplifier output signals from the amplifiers (143, 144), wherein precisely two measurement elements (130, 131) are provided and the two measurement elements (130, 131) have an identical structure, **characterized in that** the at least one sensor chip (124) has the two measurement elements (130, 131) arranged on the diaphragm (116), and **in that**, if both amplifier output signals exceed a predefined threshold value (SG1), the smaller amplifier output signal is used to calculate the output signal from the signal evaluation circuit (145) using a high-pressure function and otherwise the larger amplifier output signal is used to calculate the output signal from the signal evaluation circuit (145) using a low-pressure function, or, if both amplifier output signals fall below a predefined threshold value (SG2), the larger amplifier output signal is used to calculate the output signal from the signal evaluation circuit (145) using a low-pressure function and otherwise the smaller amplifier output signal is used to calculate the output signal from the signal evaluation circuit (145) using a high-pressure function.

2. Method for operating a sensor arrangement (110) according to Claim 1, **characterized in that** the signal evaluation circuit (145) processes the amplifier output signals from the two amplifiers (143, 144) using the respectively associated pressure function and compares the results with one another, wherein a warning signal is output if a predefined difference is exceeded.

**Revendications**

1. Procédé pour faire fonctionner un arrangement de capteur (110) en vue de déterminer au moins une pression p d'un milieu fluide ou gazeux, l'arrangement de capteur (110) possédant un raccord de pression (112), le raccord de pression (112) possédant, en tant qu'enregistreur de pression, une membrane (116) pouvant être exposée au milieu fluide ou gazeux, l'arrangement de capteur (110) comportant au moins un module capteur (114), le module capteur (114) possédant au moins une puce de capteur (124), l'arrangement de capteur (110) possédant au moins deux éléments de mesure (130, 131) disposés sur la membrane (116), l'arrangement de capteur (110) possédant en outre au moins un circuit d'interprétation (142), le circuit d'interprétation (142) acquérant au moins deux signaux des au moins deux éléments de mesure (130, 131) disposés sur la membrane (116), les au moins deux éléments de mesure (130, 131) étant reliés respectivement à un amplificateur (143, 144) séparé, les amplificateurs (143, 144) possédant des facteurs d'amplification différents, les amplificateurs (143, 144) étant reliés à un circuit d'interprétation de signal (145), le circuit d'interprétation de signal (145) acquérant les signaux de sortie d'amplificateur des amplificateurs (143, 144) et calculant le signal de sortie du circuit d'interprétation de signal (145) en fonction des signaux de sortie d'amplificateur des amplificateurs (143, 144), exactement deux éléments de mesure (130, 131) étant présents et les deux éléments de mesure (130, 131) disposant d'une structure identique,

   **caractérisé en ce que** l'au moins une puce de capteur (124) possède les deux éléments de mesure (130, 131) disposés sur la membrane (116), et **en ce que**
   lorsque les deux signaux de sortie d'amplificateur dépassent une valeur de seuil (SG1) prédéfinie, le signal de sortie d'amplificateur le plus petit est utilisé pour calculer le signal de sortie du circuit d'interprétation de signal (145) en utilisant une fonction de haute pression et sinon le signal de sortie d'amplificateur le plus grand est utilisé pour calculer le signal de sortie du circuit d'interprétation de signal (145) en utilisant une fonction de basse pression ou
   lorsque les deux signaux de sortie d'amplificateur deviennent inférieurs à une valeur de seuil (SG2) prédéfinie, le signal de sortie d'amplificateur le plus grand est utilisé pour calculer le signal de sortie du circuit d'interprétation de signal (145) en utilisant une fonction de basse pression et sinon le signal de sortie d'amplificateur le plus petit est utilisé pour calculer le signal de sortie du circuit d'interprétation de signal (145) en utilisant une fonction de haute pression.

2. Procédé pour faire fonctionner un arrangement de capteur (110) selon la revendication 1, **caractérisé en ce que** le circuit d'interprétation de signal (145) traite les signaux de sortie d'amplificateur des deux amplificateurs (143, 144) avec la fonction de pression respectivement associée et compare les résultats entre eux, un signal d'alerte étant émis en cas de dépassement d'une différence prédéfinie.

# FIG. 1

FIG. 2

EP 3 935 361 B1

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009067449 A1
- DE 102007029356 A1
- JP 2009168616 A
- EP 0460498 A2

**In der Beschreibung aufgeführte Nicht-Patentliteratur**

- **KONRAD REIF.** Sensoren im Kraftfahrzeug. 2012, 134-136